# EUROPEAN PATENT APPLICATION

(11) **EP 2 530 941 A2**
(43) Date of publication of application: **05.12.2012**
(21) Application number: 12004089.4
(22) Date of filing: 25.05.2012
(51) Int. Cl.: H04N 13/04

(54) **Mobile terminal and 3D image display method thereof**

(30) Priority: 01.06.2011 KR 20110053006
(71) Applicant: LG Electronics Inc., Yeongdeungpo-gu Seoul 150-721 (KR)
(72) Inventor: Kim, Jonghwan, Incheon (KR); Jee, Hyeran, Incheon (KR); Kim, Taeyun, Anyang Gyeonggi-Do (KR)
(74) Representative: Urner, Peter

(57) **Abstract**

A mobile terminal for performing privacy protection and sharing with respect to a 3D image displayed on a flexible display, and a method for displaying a 3D image thereof. In a privacy mode, the flexible display is folded or rolled to control displaying of a display area of a 3D image and displaying of the 3Dimage, and in a sharing mode, an image such as a PIP, or the like, is displayed on the folded display area or a 3D image is rotatably displayed, thus effectively implementing a privacy mode and a sharing mode on the flexible display.

## Description

### BACKGROUND OF THE INVENTION

### Field of the Invention

The present invention relates to a mobile terminal for performing privacy protection and sharing with respect to a 3D image displayed on a flexible display, and a method for displaying a 3D image thereof.

### Description of the Related Art

A mobile terminal may be configured to perform diverse functions. Such diverse functions may include a data and voice communication function, a function of capturing a photo image or video through a camera, a voice storage function, a music file reproducing function through a speaker system, an image or video display function, and the like. Some mobile terminals include an additional function allowing playing games, and other mobile terminals are implemented as multimedia players. Recently, mobile terminals allow users to receive broadcast or multicast signals to view video or television programs.

Efforts are ongoing to support and increase the functionality of mobile terminals. Such efforts include software and hardware improvements, as well as changes and improvements in the structural components which form the mobile terminal.

A touch function of mobile terminals allows for users, who are not familiar to a button/key input, to conveniently operate terminals by using a touch screen. Recently, the touch function is settling as an important function of mobile terminals along with a user interface, as well as allowing for a simple input. Thus, as the touch function is applied in various forms to mobile terminals, development of a user interface (UI) fitting the various forms of touch function is increasingly required.

Recently launched mobile terminals provide a function of displaying a three-dimensional (3D) stereoscopic image allowing for depth perception and stereovision beyond the level of displaying 2D images. Thus, users is able to use more realistic user interfaces or contents through 3D stereoscopic images.

However, in the related art mobile terminals, a 3D image displayed on a screen is highly likely to be exposed to a user at a lateral side, failing to properly protect user privacy, and also, when a plurality of users want to share a image, there are no other particular methods currently available than changing a display angle.

Namely, the 3D image display on mobile terminals is performed in consideration of only a front user, and a user interface allowing for controlling in relation to protection of user privacy with respect to a 3D image and sharing of a 3D image is not provided with respect to at least one or more lateral users. Namely, currently, mobile terminals fail to provide sufficient user interfaces allowing users to conveniently enjoy 3D images as desired.

### SUMMARY OF THE INVENTION

Accordingly, one object of the present invention is to address the above-noted and other problems.

Another object of the present invention is to provide a mobile terminal capable of effectively performing privacy protection and sharing with respect to a 3D image on a flexible display, and a method for displaying a 3D image thereof.

Another object of the present invention is to provide a mobile terminal capable of performing privacy protection and sharing with respect to a 3D image according to the structure of a flexible display, and a method for displaying a 3D image thereof.
To achieve these and other advantages and in accordance with the purpose of the present invention, as embodied and broadly described herein, the present invention provides in one aspect a method for displaying a 3D image of a mobile terminal, including: displaying a 3D image in a stereoscopic display; detecting folding of the stereoscopic display; confirm a display mode; and controlling display of a 3D image on a folded portion according to the confirmed display mode.
To achieve these and other advantages and in accordance with the purpose of the present invention, as embodied and broadly described herein, the present invention provides in another aspect a mobile terminal including: a display unit configured to display a 3D image; and a detecting unit configured to folding of the stereoscopic display; and a controller configured to confirm a display mode and control display of the 3D image on a folded portion to change viewing angle of a side according to the confirmed display mode.
Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

FIG. 1 is a schematic block diagram of a mobile terminal related to an embodiment of the present invention;

FIG. 2A is a front perspective view of the mobile terminal related to an embodiment of the present invention;

FIG. 2B is a rear perspective view of the mobile terminal illustrated in FIG. 2A;

FIG. 3 is a view showing a basic concept of implementing privacy/sharing on a flexible display of a mobile terminal according to an embodiment of the present invention;

FIGS. 4A and 4B are views showing an example of implementing a privacy mode or a sharing mode by folding an edge face of the flexible display;

FIGS. 5A to 5E are views showing an example of implementing the privacy mode and the sharing mode by dividing and folding the flexible display in various manners according to an embodiment of the present invention;

FIG. 6 is a view showing an example of implementing the privacy mode and the sharing mode by rolling the flexible display according to an embodiment of the present invention;

FIG. 7 is a view showing an example of implementing the privacy mode and the sharing mode through a complex structure of folding and rolling of the flexible display according to an embodiment of the present invention;

FIG. 8 is a view showing viewing of a 3D image in a normal mode according to an embodiment of the present invention;

FIG. 9 is a view showing a privacy effect in case of using the folding structure according to an embodiment of the present invention;

FIG. 10 is a view showing an example of a method for controlling displaying of a 3D image in order to maximize the privacy effect in the folding structure of FIG. 9;

FIG. 11 is a view showing an example of a method for controlling displaying of a 3D image to implement the sharing mode in the folding structure;

FIGS. 12A to 12C are views showing an example of a method for controlling displaying of a 3D image in order to implement the sharing mode in the folding structure;

FIG. 13 is a view showing an example of a method for controlling displaying of a 3D image in order to implement the sharing mode in the rolling structure; and

FIGS. 14 and 15 are flow charts illustrating a process of a method for implementing the privacy mode and the sharing mode on the flexible display according to an embodiment of the present invention.

### DETAILED DESCRIPTION OF THE INVENTION

The mobile terminal according to exemplary embodiments of the present invention will now be described with reference to the accompanying drawings. In the following description, usage of suffixes such as 'module', 'part' or 'unit' used for referring to elements is given merely to facilitate explanation of the present invention, without having any significant meaning by itself. Accordingly, the 'module' and 'part' may be mixedly used. In describing the present invention, if a detailed explanation for a related known function or construction is considered to unnecessarily divert the gist of the present invention, such explanation has been omitted but would be understood by those skilled in the art. It could be understood that the accompanying drawings are presented to help understand the present invention more clearly and the technical concept of the present invention is not limited by the accompanying drawings.

Mobile terminals may be implemented in various forms. For example, the terminal described in the present invention may include mobile terminals such as mobile phones, smart phones, notebook computers, digital broadcast receivers, PDAs (Personal Digital Assistants), PMPs (Portable Multimedia Player), navigation devices, and the like, and stationary terminals such as digital TVs, desk top computers and the like. Hereinafter, it is assumed that the terminal is a mobile terminal. However, it would be understood by a person in the art that the configuration according to the embodiments of the present invention can be also applicable to the fixed types of terminals, except for any elements especially configured for a mobile purpose.

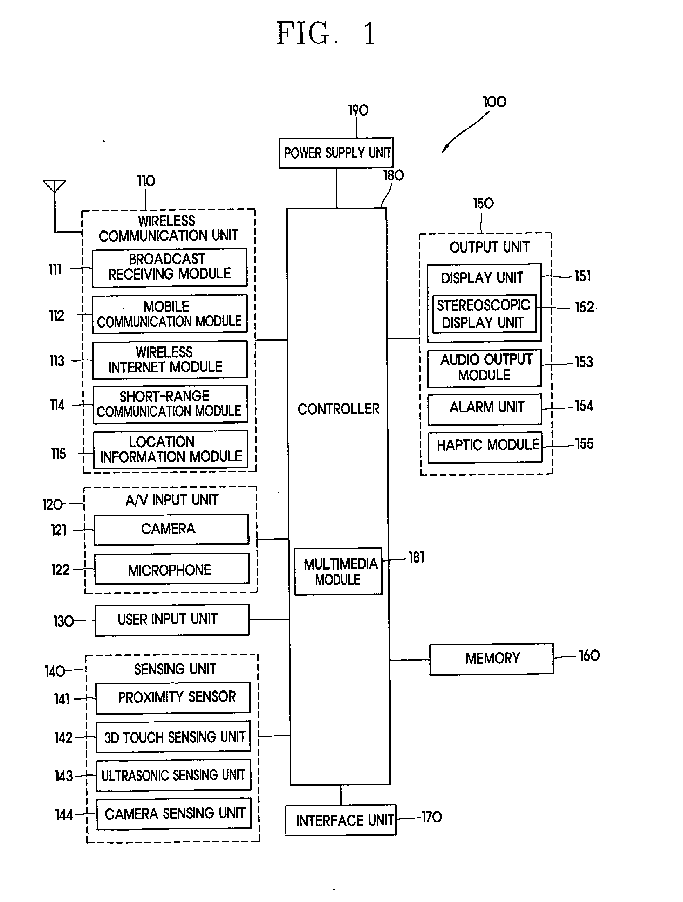

FIG. 1 is a block diagram of a mobile terminal according to an embodiment of the present invention.

The mobile terminal 100 may include a wireless communication unit 110, an AN (Audio/Video) input unit 120, a user input unit 130, a sensing unit 140, an output unit 150, a memory 160, an interface unit 170, a controller 180, and a power supply unit 190, etc. FIG. 1 shows the mobile terminal as having various components, but it should be understood that implementing all of the illustrated components is not a requirement. Greater or fewer components may alternatively be implemented.

The elements of the mobile terminal will be described in detail as follows.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal. The broadcast associated information may also be provided via a mobile communication network and, in this case, the broadcast associated information may be received by the mobile communication module 112. Broadcast signals and/or broadcast-associated information received via the broadcast receiving module 111 may be stored in the memory 160 (or anther type of storage medium).

The mobile communication module 112 transmits and/or receives radio signals to and/or from at least one of a base station (e.g., access point, Node B, etc.), an external terminal (e.g., other user devices) and a server (or other network entities). Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 114 is a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 115 is a module for checking or acquiring a location (or position) of the mobile terminal. A typical example of the location information module is a GPS (Global Positioning System).

With reference to FIG. 1, the AN input unit 120 is configured to receive an audio or video signal. The AN input unit 120 may include a camera 121 (or other image capture device) and a microphone 122 (or other sound pick-up device). The camera 121 processes image data of still pictures or video obtained by an image capture device in a video capturing mode or an image capturing mode. The processed image frames may be displayed on a display unit 151 (or other visual output device).

The image frames processed by the camera 121 may be stored in the memory 160 (or other storage medium) or transmitted via the wireless communication unit 110. Two or more cameras 121 may be provided according to the configuration of the mobile terminal.

The microphone 122 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate input data from commands entered by a user to control various operations of the mobile terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 (or other detection means) detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect folding or tolling of a display unit (e.g., stereoscopic display) of the mobile terminal

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of them may be configured to be transparent to allow viewing of the exterior, which may be called transparent displays. A typical transparent display may be, for example, a TOLED (Transparent Organic Light Emitting Diode) display, or the like. The rear structure of the display unit 151 may include the light-transmissive structure. With such a structure, the user can view an object located at a rear side of the terminal body through the region occupied by the display unit 151 of the terminal body.

The mobile terminal 100 may include two or more display units according to its embodiment. For example, a plurality of display units may be separately or integrally disposed on one surface or disposed on both surfaces of the mobile terminal, respectively.

Meanwhile, when the display unit 151 and a sensor (referred to as a 'touch sensor', hereinafter) are overlaid in a layered manner (referred to as a 'touch screen', hereinafter), the display unit 151 may be used as both an input device and an output device. The touch sensor may have the form of, for example, a touch film, a touch sheet, a touch pad, etc.

The touch sensor may be configured to convert a pressure applied to a particular portion of the display unit 151 or a change in capacitance at a particular portion of the display unit 151 into an electrical input signal. The touch sensor may be configured to detect the pressure when a touch is applied, as well as a touched position or area.

When a touch with respect to the touch sensor is inputted, corresponding signal (signals) are transmitted to a touch controller. The touch controller processes the signal (signals) and transmit corresponding data to the controller 180. Thus, the controller 180 can recognize which portion of the display unit 151 has been touched.

With reference to FIG. 1, the proximity sensor 141 may be disposed within the mobile terminal covered by the touch screen or near the touch screen. The proximity sensor 141 refers to a sensor for detecting the presence or absence of an object that accesses a certain detect surface or an object that exists nearby by using the force of electromagnetism or infrared rays without a mechanical contact. Thus, the proximity sensor 141 has a longer life span compared with a contact type sensor, and it can be utilized for various purposes.

The example of the proximity sensor 141 may be a transmission type photo sensor, a direct reflection type photo sensor, a mirror-reflection type photo sensor, an RF oscillation type proximity sensor, a capacitance type proximity sensor, a magnetic proximity sensor, an infrared proximity sensor. When the touch screen is an electrostatic type touch screen, an approach of the pointer is detected based on a change in an electric field according to the approach of the pointer. In this case, the touch screen (touch sensor) may be classified as a proximity sensor.

Also, the display unit 151 may be configured as a stereoscopic display unit 152 displaying a stereoscopic image.

Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

As illustrated, a left image and a right image required for implementing a 3D stereoscopic image is displayed on the stereoscopic display unit 152 by a stereoscopic processing unit 152a . The stereoscopic processing unit may receive the 3D image and extract the left image and the right image, or may receive the 2D image and change it into a left image and a right image.

When a touch sensor is overlaid on the stereoscopic display unit 152 in a layered manner, or when the stereoscopic display unit and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen.

The ultrasonic sensing unit 143 is configured to recognize position information of the sensing object by using ultrasonic waves. The ultrasonic sensing unit 143 may include, for example, an optical sensor 121 and a plurality of ultrasonic sensors.

The optical sensor is configured to sense light. For example, light may be ultraviolet rays, and the optical sensor may be an infrared port (Infrared data association (IRDA).

The ultrasonic sensors may be configured to sense ultrasonic waves. The plurality of ultrasonic sensors are disposed to be spaced apart, and accordingly, the plurality of ultrasonic sensors have a time difference in sensing ultrasonic waves generated from the same position or an adjacent position.

Ultrasonic waves and light are generated from a wave generation source. The wave generation source is provided in the sensing object, e.g., the stylus, or the like. Since light is even faster than ultrasonic waves, time for light to arrive at the optical sensor is even shorter than time for ultrasonic waves to arrive at the ultrasonic sensor. Thus, the position of the wave generation source can be calculated by using a time difference from the time for ultrasonic waves to arrive by using light as a reference signal.

The camera sensing unit 144 includes at least one of a camera, a photo sensor, and a laser sensor.

For example, the camera and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer, or other sound generating device.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

A method for processing a user input with respect to the mobile terminal will now be described.

The user input unit 130 is manipulated to receive a command for controlling the operation of the mobile terminal 100 and may include a plurality of manipulation units. The manipulation units may be generally referred to as a manipulating portion, and various methods and techniques can be employed for the manipulation portion so long as they can be operated by the user in a tactile manner.

Various types of visual information may be displayed on the display unit 151. The information may be displayed in the form of character, number, symbol, graphic, icon, etc, or may be configured as a 3D stereoscopic image.

In order to input such information, at least one of the characters, numbers, symbols, graphics and icons are displayed in a certain array so as to be implemented in the form of a keypad. Such keypad may be so-called 'soft key'.

The display unit 151 may be operated as a whole region or may be divided into a plurality of regions and accordingly operated. In the latter case, the plurality of regions may be operation in association with each other.

For example, an output window and an input window may be displayed at upper and lower portions of the display unit 151, respectively. The output window and the input window are regions allocated for outputting or inputting information, respectively. Soft keys including numbers for inputting a phone number, or the like, are outputted to the input window. When the soft key is touched, a number, or the like, corresponding to the touched soft key is displayed on the output window. When the first manipulation unit is manipulated, a call connection with respect to a phone number displayed on the output window is attempted, or text displayed on the output window may be input to an application.

The display unit 151 or the touch pad may be configured to receive a touch through scrolling. The user may move a cursor or a pointer positioned on an entity, e.g., an icon, or the like, displayed on the display unit 151 by scrolling the display unit 151 or the touch pad. In addition, when the user moves his fingers on the display unit 151 or the touch pad, the path along which the user's fingers move may be visually displayed on the display unit 151. This would be useful in editing an image displayed on the display unit 151.

One function of the terminal may be executed in case where the display unit 151 (touch screen) and the touch pad are touched together within a certain time range. The both touches may be clamping the terminal body with the user's thumb and index finger. The one function may be, for example, activation or deactivation of the display unit 151 or the touch pad.

Hereinafter, a mechanism for accurately recognizing a touch input with respect to a stereoscopic image on the mobile terminal 100 will be described in detail.

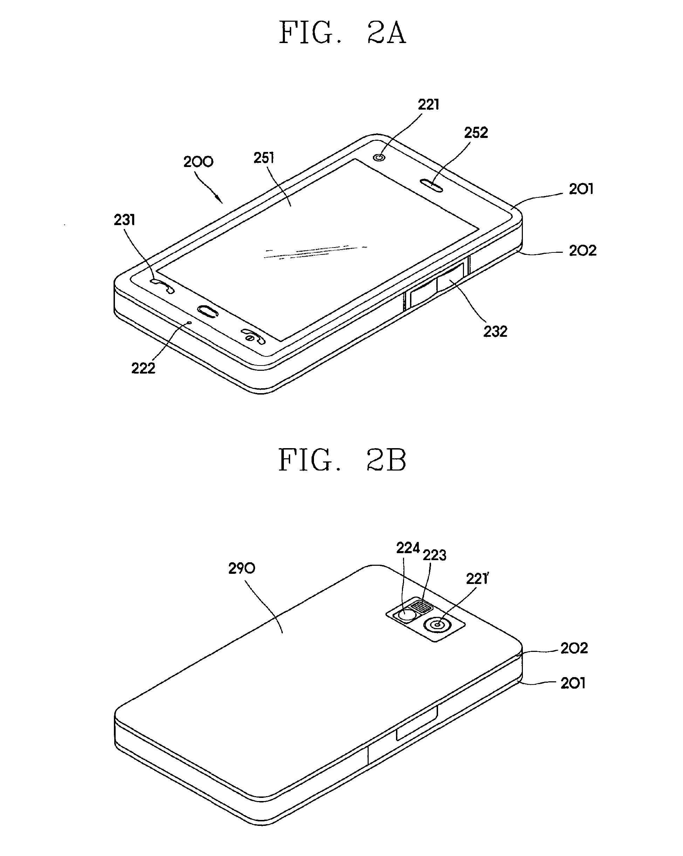

FIG. 2A is a front perspective view of the mobile terminal according to an embodiment of the present invention. FIG. 2B is a rear perspective view of the mobile terminal as shown in FIG. 2A.

The disclosed mobile terminal 200 has a bar type terminal body. However, the present invention is not limited thereto and may be applicable to a slide type mobile terminal, a folder type mobile terminal, a swing type mobile terminal, a swivel type mobile terminal, etc, in which two or more bodies are combined to be relatively movable.

The body includes a case (or casing, housing, cover, etc.) constituting the external appearance. In this embodiment, the case may include a front case 201 and a rear case 202. Various electronic components are installed in the space between the front case 201 and the rear case 202. One or more intermediate cases may be additionally disposed between the front case 201 and the rear case 202.

The cases may be formed by injection-molding a synthetic resin or may be made of a metallic material such as stainless steel (STS) or titanium (Ti), etc.

A stereoscopic display unit 252, a sensing unit 240, an audio output unit 253, a camera 221, user input units 230/231, 232, a microphone 222, an interface unit 270, etc. may be disposed on the terminal body, mainly, on the front case 201.

The stereoscopic display unit 252 occupies the most portion of a circumferential surface of the front case 201. The audio output unit 253 and the camera 221 are disposed at a region adjacent to one end portion among both end portions of the stereoscopic display unit 252, and the user input unit 231 and the microphone 222 are disposed at a region adjacent to another end portion. The user input unit 232 and the interface unit 270 may be disposed at the sides of the front case 201 and the rear case 202.

The user input unit 230 is manipulated to receive a command for controlling the operation of the mobile terminal 200 and may include a plurality of manipulation units 231 and 232. The manipulation units 231 and 232 may be generally referred to as a manipulating portion, and various methods and techniques can be employed for the manipulation portion so long as they can be operated by the user in a tactile manner.

Content inputted by the first and second manipulation units 231 and 232 can be variably set. For example, the first manipulation unit 231 may receive a command such as starting, ending, scrolling, etc., and the second manipulation unit 232 may receive a command such as controlling of the size of a sound outputted from the audio output unit 152 or conversion into a touch recognition mode of the display unit 151. The stereoscopic display unit 252 may form a stereoscopic touch screen with the sensing unit 240, and the stereoscopic touch screen may be an example of the user input unit 230.

The sensing unit 240, a 3D sensor, is configured to detect a 3D position of a detection object applied a touch. The sensing unit 240 may include a camera 221 and a laser sensor 244. The laser sensor 244 is mounted on the terminal body, scans laser, and detects reflected laser, to thereby detect the distance between the terminal body and the detection object. However, the present invention is not limited thereto and the sensing unit 240 may be configured in the form of a proximity sensor, a stereoscopic touch sensing unit, an ultrasonic sensing unit, or the like.

With reference to FIG. 2B, a camera 221' may additionally be disposed on the rear surface of the terminal body, namely, on the rear case 202. The camera 221' may have an image capture direction which is substantially opposite to that of the camera 121 (See FIG. 2A), and have a different number of pixels than the camera 221.

For example, the camera 221 may have a smaller number of pixels to capture an image of the user's face and transmit such image to another party, and the camera 221' may have a larger number of pixels to capture an image of a general object and not immediately transmit it in most cases. The cameras 221 and 221' may be installed on the terminal body such that they can be rotatable or popped up.

A flash 223 and a mirror 224 may be additionally disposed adjacent to the camera 221'. When an image of a subject is captured with the camera 221', the flash 223 illuminates the subject. The mirror 224 allows the user to see himself when he wants to capture his own image (i.e., self-image capturing) by using the camera 221'.

An audio output unit may be additionally disposed on the rear surface of the terminal body. The audio output module may implement stereophonic sound functions in conjunction with the audio output module 253 (See FIG. 2A) and may be also used for implementing a speaker phone mode for call communication.

A power supply unit 290 for supplying power to the mobile terminal 200 is mounted on the terminal body. The power supply unit 290 may be installed within the terminal body or may be directly attached to or detached from the exterior of the terminal body.

Besides the antenna for a call, or the like, mounted on the terminal body, a broadcast signal receiving antenna, a Bluetooth^{™} antenna, a satellite signal receiving antenna, an antenna for receiving data of wireless Internet, or the like, may be additionally disposed. A mechanism implementing the mobile terminal illustrated in FIG. 2 is installed in the terminal body.

The mobile terminal 100 as shown in FIG. 1 may be configured to operate with a communication system, which transmits data via frames or packets, such as wired and wireless communication systems, as well as satellite-based communication systems.

3D stereoscopic image

In general, a 3D stereoscopic image (referred to as a '3D image', hereinafter) is an image refers to an image making a viewer feel that a gradual depth and reality of an object on the monitor is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The 3D image may be displayed according to a stereoscopic scheme (a glass scheme), an auto-stereoscopic scheme (glassless scheme), a projection scheme (holographic scheme), or the like. A stereoscopic scheme is commonly used for home television receivers, or the like, and includes a Wheatstone stereoscopic scheme, or the like. The auto-stereoscopic scheme, which is commonly used for mobile terminals, or the like, includes, for example, a parallax barrier scheme and a lenticular scheme. The projection scheme includes a reflective holographic scheme, a transmissive holographic scheme, or the like.

Generation and displaying 3D image

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Depth of 3D image

Depth (or a depth value) of a 3D image refers to an index indicating the difference in a 3D distance among objects within the image. The depth is defined to have 256 levels (a maximum value of 255 to a minimum value), and as the depth has a higher value, it indicates to be closer to the user. Thus, adjusting of the depth in the 3D image means that when the 3D image is displayed to have the original size, the 3D image is displayed to have the original depth, and when content thereof is displayed as a small image, the 3D image is adjusted to have a depth level lower than that of the original depth.

For example, on the assumption that the depth is defined to have 256 levels and the maximum value is 255 and the minimum value is 0, when the 3D image is displayed to have the original size, the depth is adjusted to be 255, and when the 3D image is displayed to have a smaller size, the depth is adjusted to have a value smaller than 255.

Flexible display

In general, a CRT, an LCD, and a PDP are all implemented on a hard substrate, which, thus, cannot be used as a display on a curved face. Thus, in order to overcome such shortcomings, a flexible display which is bent flexibly has been developed as a display device. The flexible display having the bending characteristics uses a plastic substrate instead of a hard, or stiff, glass substrate. Thus, the flexible display has advantages in that it can be folded (or bent) or rolled (or wound). The flexible display, a type of a stereoscopic (3D) display unit according to an embodiment of the present invention, includes a flexible organic light emitting diode (FOLED), a curved LCD, and the like.

The present invention proposes a 3D image display method for performing privacy protection and sharing with respect to a 3D image on a flexible display.

In the present invention, an embodiment of privacy protection and sharing with respect to a 3D image is divided into an aspect of hardware configuration/array (form factor) and an aspect of a user interface (UI). The form factor aspect is implementing a privacy mode (or a security mode) or a sharing mode with respect to a 3D image by adjusting the degree of folding or rolling of the flexible display and the UI aspect is implementing a privacy mode against a lateral viewer (someone else) by distorting an image displayed a bent portion through folding or processing the edge to have a black pattern or implementing a sharing mode by displaying a different image on the bent portion.

Implementation of privacy/sharing mode in flexible display

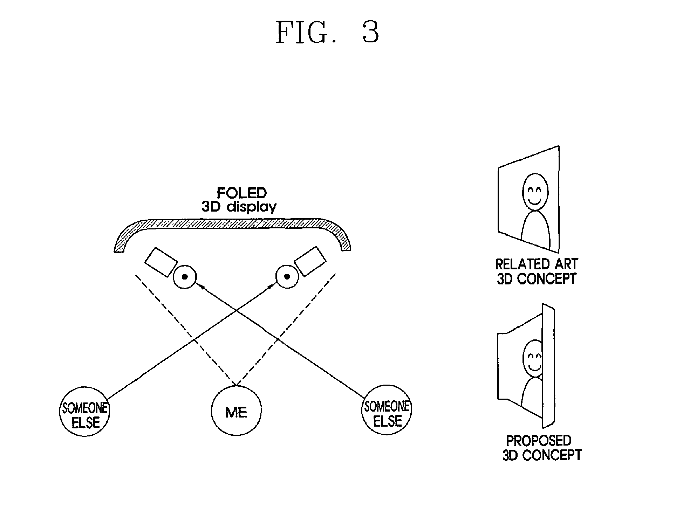

FIG. 3 is a view showing a basic concept of implementing privacy/sharing on a flexible display of a mobile terminal according to an embodiment of the present invention.

As shown in FIG. 3, the display unit 151 according to an embodiment of the present invention is implemented as a flexible display, and a left portion (or a left side) and/or a right portion (or a right side) of the flexible display is folded (or bent) according to the vision (or location, viewing angle)) of a lateral user (or side user), whereby the privacy of the terminal user is protected or sharing is provided with respect to a different person who views a 3D image at a lateral side by the folded portion.

Namely, in an embodiment of the present invention, when the privacy mode is set, the edge portion of the stereoscopic display is folded or rolled at a certain angle according to the vision (or location) of the lateral user. The vision of the lateral user can be recognized by detecting the corresponding user's location through a sensor, and the folding angle or the rolling length may be set as a default in advance through menu setting and then additionally adjusted according to a user input (key, button, or touch).

Folding of the flexible display is the same as the effect in which, with paper on the floor held, when both sides or one side of the paper are pushed toward the center, a left portion and/or a right portion are bent. Namely, in an embodiment of the present invention, at least one of upper, lower, left, and right portions of the flexible display is pushed toward a central portion thereof by circuitry so as to be folded or bent. Here, an unfolded region may be fixed or may be made of a material not allowing folding. The folding angle may be set as a default in setting the privacy mode and may be adjustable according to an input.

In an embodiment of the present invention, when the left portion and/or right portion of the flexible display are/is folded, displaying of a 3D image on the flexible display or a 3D image on the folded edge face is controlled. The controlling of displaying of the 3D image includes controlling of the 3D image displayed on front and rear surfaces (the front surface is processed to have a black pattern or the front surface is processed to be black and the 3D image is displayed on the rear surface), as well as controlling the 3D image displayed on a front surface of the folded portion. The partial displaying of the 3D image is determined by the degree at which the user folds the flexible display.

Thus, the controller 180 may fold the left and right or upper and lower edge face of the flexible display or display a 3D image on the folded edge face according to the privacy mode or the sharing mode selected by the user.

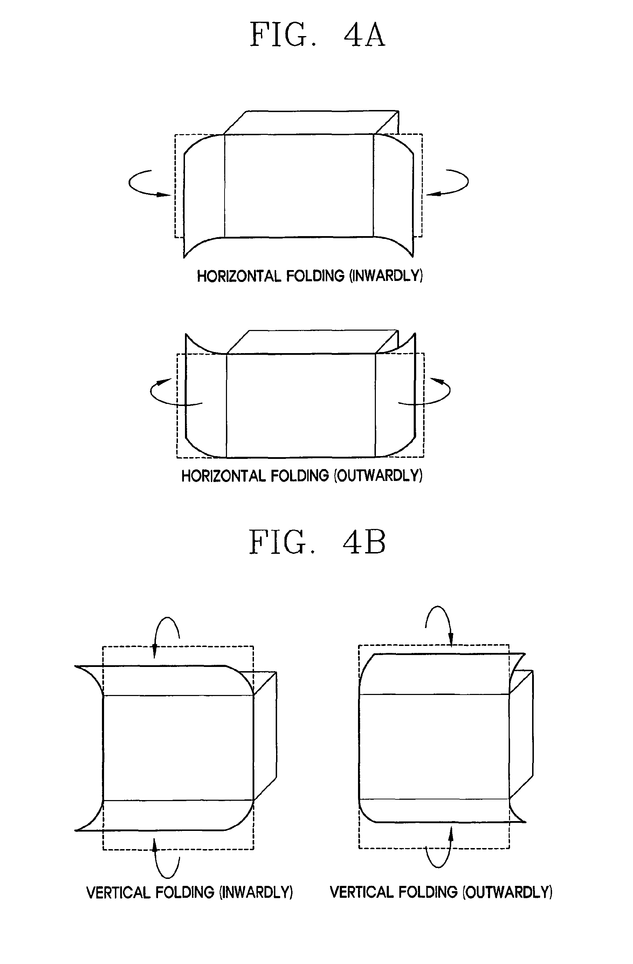

FIGS. 4A and 4B are views showing an example of implementing a privacy mode or a sharing mode by folding an edge face of the flexible display.

As shown in FIGS. 4A and 4B, in an embodiment of the present invention, the left and right or upper and lower edge face of the flexible display is not fixed but folded, and the unfolded inner side of the flexible display is fixed to guarantee security and safety.

Accordingly, when upper and lower or left and right edge portion of the flexible display is folded inwardly (or forwardly), since the corresponding portion is bent, a currently display 3D image can be hardly viewed at the lateral side, naturally implementing the privacy mode. Also, when the upper and lower or left right edge portion of the flexible display is folded outwardly (or backwardly), a 3D image may be displayed on the folded portion, implementing the sharing mode in which the corresponding 3D image can be shared with the lateral user.

Meanwhile, since the flexible display is formed of a plastic substrate, it can also be folded in a divided manner (i.e., plane folding) as well as folded along the curved surface (FIGS. 4A and 4B). The divided folding refers to dividing a front surface of the into a plurality of faces and folding the respective divided portions. The divided folding includes an extended wallet type folding, folding screen type folding, and fanwise folding. The folding of the flexible display includes folding according to a user input (a button or a key) and folding by touching (touch, touch & drag, and flicking) a region desired to be folded.

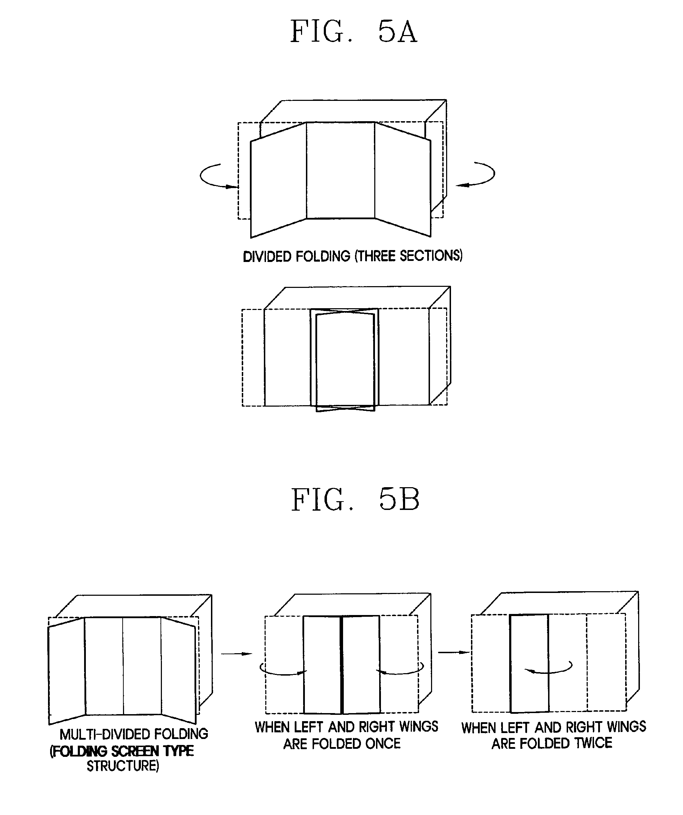

FIGS. 5A to 5E are views showing an example of implementing the privacy mode and the sharing mode by dividing and folding the flexible display in various manners according to an embodiment of the present invention.

FIGS. 5A and 5B show an example of implementing the privacy mode and the sharing mode by dividedly folding the flexible display in an extended wallet form.

The folding in the extended wallet form implements the privacy mode by inwardly folding a plurality of the left and right wings (i.e., the edge faces) of the flexible display at a certain angle, and when the left and right wings are folded several times, it makes an extended wallet form. Here, the folded state may be locked hardwarewise according to the angle at which the left and right wings are folded, and a fixed face thereof is changed according to the number of folded section faces.

As shown in FIG. 5A or 5B, when the left and right wings are inwardly folded at a certain angle in the privacy mode in the three divided or four divided folding, the middle section face is fixed. As shown in FIG. 5B, when the both wings are completely folded inwardly in the four divided folding, the both wings are folded again, only one section face is fixed. The fixing of the section face is controlled by the controller 180 according to user selection (mode and the degree of folding in each mode).

In an embodiment of the present invention, when the left and right wings are completely folded, the LCD of the folded faces becomes transparent so as to be changed into a transparent display, and a 3D image is displayed on the unfolded face.

In a different embodiment of the present invention, when the left and right wings are completely folded, the unfolded face (or fixed face) is turned off and a 3D image may be displayed on a rear surface of the transparent display.

Thus, in the folding in the extended wallet form, the sharing mode is implemented when the left and right wings of the flexible display are unfolded, the privacy mode is implemented when the left and right wings are folded (at a certain angle or completely).

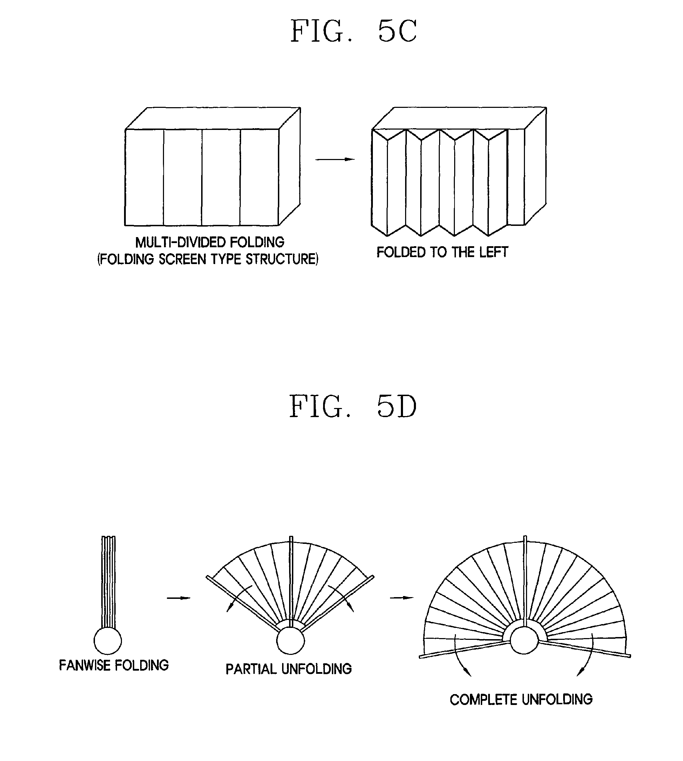

FIG. 5C shows an example of implementing the privacy mode and the sharing mode by dividedly folding the flexible display in a folding screen type structure.

The folding screen type folding is multi-dividing (N dividing) the flexible display and folding the section faces like a folding screen is unfolded in a state in which the edges of left or right section faces are fixed. In the folding screen type folding, a divided area may be selectively folded. When the user selects a divided area, the controller 180 displays a folding line on the flexible display in a certain color or form.

Also, in the folding screen type folding, an unfolded particular face can be locked hardwarewise according to an angle at which the flexible display is folded, and the folded area is operated to be protected hardwarewise (or by hardware). In particular, when one face overlaps with other faces, the folded faces become transparent and only the middle face displays a 3D image.

Thus, in folding screen type folding, the sharing mode is implemented when the flexible display is entirely unfolded, and the privacy mode is implemented when the flexible display is divided and folded.

FIG. 5D shows an example of implementing the privacy mode and the sharing mode by dividing and folding the flexible display in a fanwise structure according to an embodiment of the present invention.

The folding in the fanwise structure illustrated in FIG. 5D is multi-dividing and folding the flexible display in a fanwise form and unfolding it horizontally. The unfolded area in the structure is adjusted according to a user setting or input, and the unfolded area is locked hardwarewise according to the degree of folding. The controller 180 makes a face not completely unfolded transparent and displays a 3D image on the unfolded face.

In the fanwise structure folding, the sharing mode is implemented when the flexible display is entirely unfolded and the privacy mode is implemented when only a portion of the flexible display is unfolded.

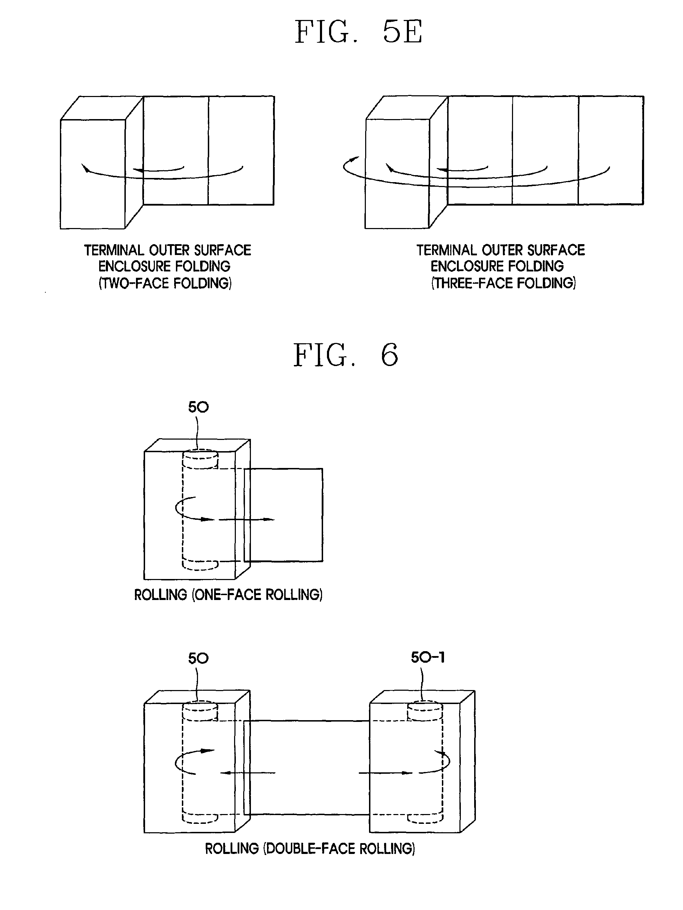

FIG. 5E shows an example of implementing the privacy mode and the sharing mode by folding the flexible display along an outer surface of the terminal according to an embodiment of the present invention.

In the present embodiment, the flexible display may be folded along the outer surface of the terminal. This structure is advantageous in that a 3D image can be displayed in various directions on the respective folded faces. In the terminal outer surface enclosure folding structure, with one surface fixed, one or more faces may be folded and unfolded, and the respective folded faces may be selectively display a 3D image.

In this structure, the privacy is implemented by displaying a 3D image on a particular face when the flexible display is entirely folded (or wounded) on the outer surface of the terminal in an enclosure manner, and the sharing mode is implemented by displaying a 3D image on a portion or on the entirety of the unfolded (or exposed) flexible display.

FIG. 6 is a view showing an example of implementing the privacy mode and the sharing mode by rolling the flexible display according to an embodiment of the present invention.

As shown in FIG. 6, the flexible display is wound on a roller 50 within the terminal and can be outwardly withdrawn by the user or according to a particular withdrawal mode. Rolling of the flexible display is divided into one-side rolling of withdrawing the flexible display from one roller 50 and double-side rolling of rolling the flexible display from two rollers 50 and 50-1. The rollers 50 and 50-1 are operated by a motor (not shown) controlled by the controller 180.

When the flexible display is drawn out by a particular length from the roller, the flexible display is locked with the corresponding length, and the controller 180 automatically recognizes a display area of the flexible display according to the rolled length and displays a 3D image.

Thus, in the rolling structure, the controller 180 draws out the flexible display by a certain length in setting the privacy mode, or when the area of the outwardly withdrawn flexible display is a certain area, the controller 180 recognizes the privacy mode. When the rolled flexible display is entirely drawn out, the controller 180 recognizes the sharing mode and displays a 3D image on the entirety of the flexible display.

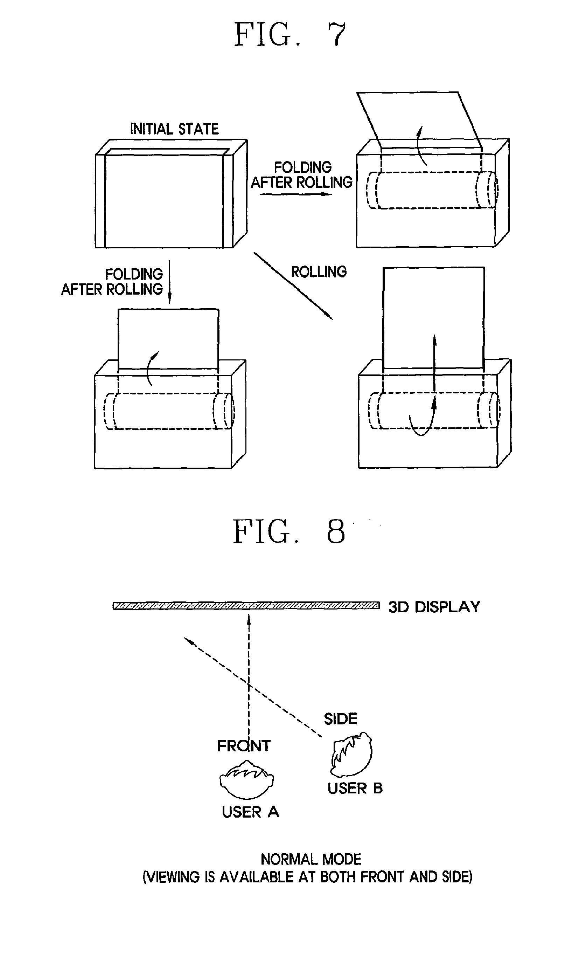

FIG. 7 is a view showing an example of implementing the privacy mode and the sharing mode through a complex structure of folding and rolling of the flexible display according to an embodiment of the present invention.

As shown in FIG. 7, the complex structure of folding and rolling allows the flexible display to be folded and rolled simultaneously. In this structure, the flexible display is rolled (withdrawn) and then inwardly or outwardly folded at a certain angle at a corresponding length (the reverse operation is also possible). In particular, when the flexible display is folded, it is fixed by hardware according to the angle at which it is folded. Also, the flexible display can be folded at 180 degrees and then rolled.

Thus, in the complex structure of folding and rolling, when the flexible display in a folded state is rolled out, the controller 180 displays a 3D image on the corresponding face, thus implementing the sharing mode.

A detailed operation of implementing the privacy mode and the sharing mode in the various folding, rolling, and the folding and rolling complex structures will be described.

In an embodiment of the present invention, the mode of the mobile terminal is divided into a normal mode, a privacy mode and a sharing mode according to a flexible display type.

The flexible display type includes five folding structures (the edge folding structure, the divided folding structure, the N-divided folding structure, the fanwise folding structure, and the terminal outer surface enclosure folding structure), rolling structure, and folding and rolling complex structure, and each mode is determined according to the length of the flexible display which is folded or rolled according to a user setting.

FIG. 8 is a view showing viewing of a 3D image in the normal mode according to an embodiment of the present invention.

As shown in FIG. 8, in the normal mode, the flexible display (stereoscopic display) is not folded or rolled, and a terminal user (user A) and a user B (someone else) may view a 3D image from the front and from the side.

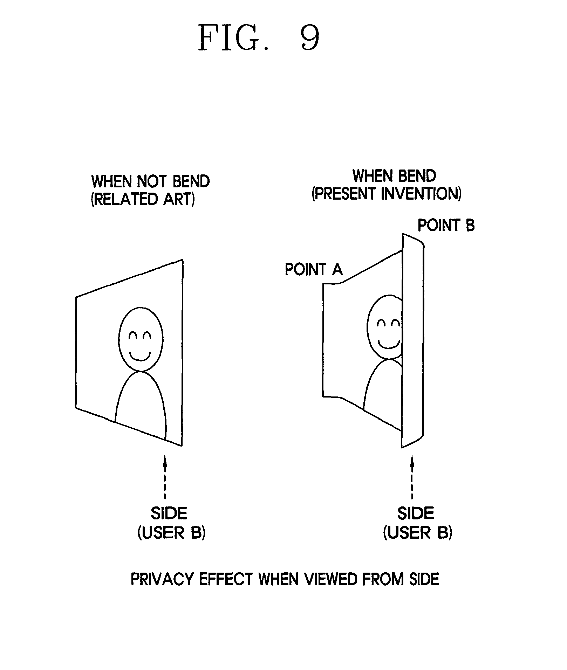

FIG. 9 is a view showing a privacy effect in case of using the folding structure according to an embodiment of the present invention.

As shown in FIG. 9, when the curved surface or plane surface folding structure is applied to the flexible display (3D display), in a state in which a 3D image (the shape of a person) is displayed on the flexible display, the user B (someone else) at the lateral side can view an image of a point A but he cannot view an image of a point B because of the bent edge face. Thus, the user A, who is currently viewing the 3D image, can view the 3D image without being interfered with by the user B by slightly changing the angle of the mobile terminal or changing the folding angle.

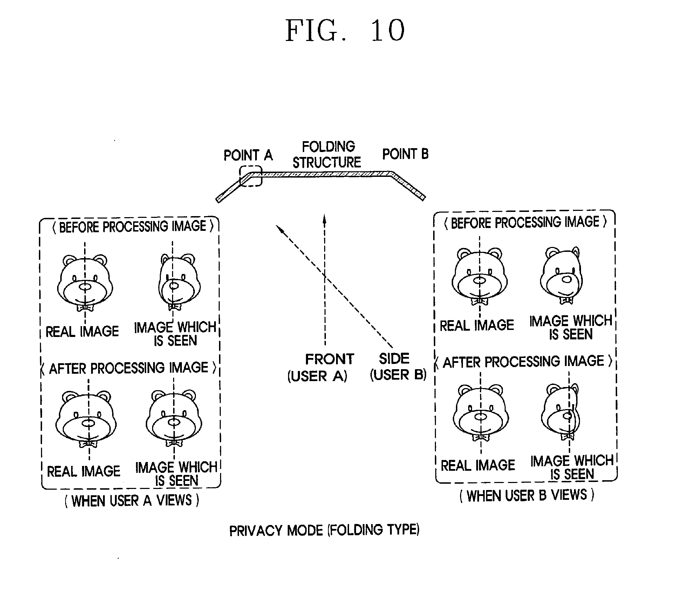

FIG. 10 is a view showing an example of a method for controlling displaying of a 3D image in order to maximize the privacy effect in the folding structure of FIG. 9.

As mentioned above, in the divided folding (FIGS. 5A and 5B), an edge section face of the flexible display (stereoscopic display) may be inwardly folded at a certain angle. The degree of bending (folding) may be set as a default value when the user sets the privacy mode, and may be increased or decreased whenever the user inputs a particular key (or button).

Also, as described above with reference to FIG. 9, the user A selects the privacy mode and prevents the user B from viewing the 3D image by using the flexible display of the folding structure. Also, in this case, however, the user B may not properly view the 3D image displayed at the point B on the flexible display, but he may be able to view a portion of the 3D image displayed in the vicinity of the point A. Also, since the point A on the flexible display is currently folded, the image seen to the user A is different from the actual image due to the folded portion.

Thus, in the present embodiment, a 3D image close to the actual image is displayed on the folded portion (the bent portion) for the front user (user A) and a distorted image which is much different from the actual image is displayed to the lateral user (user B), thus maximizing the privacy effect.

Namely, in the privacy mode, the controller 180 recognizes the bent portion (folded position) and previously distorts the 3D image of the bent point (A point) according to the folding angle, to thus allow a normal actual image to be seen to the user A from the front and increase the distortion effect to the user B from the side, thus guaranteeing the privacy of the user A. In particular, the controller 180 processes a rear face of the bent edge face of the flexible display with a black pattern to thus further increase the privacy effect.

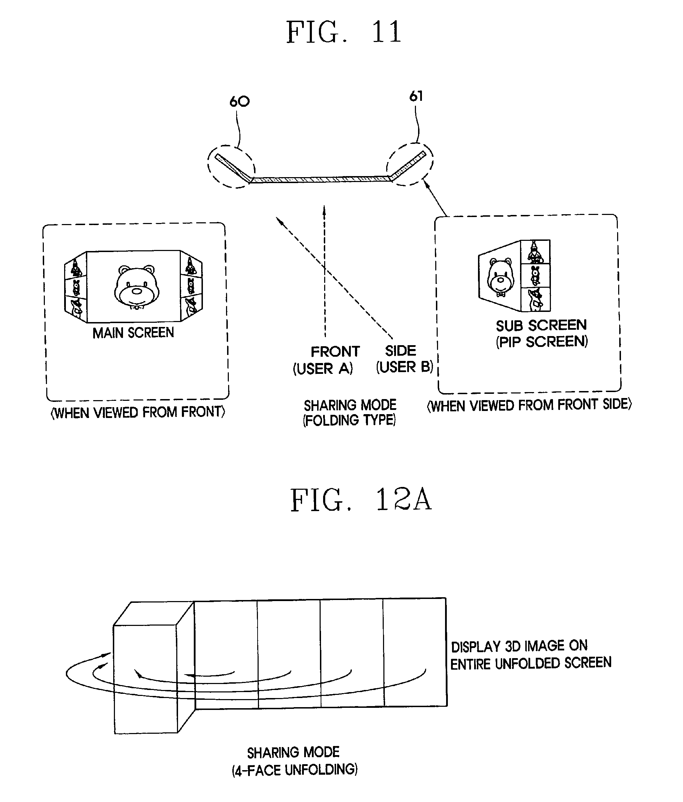

FIG. 11 is a view showing an example of a method for controlling displaying of a 3D image to implement the sharing mode in the folding structure.

As shown in FIG. 11, rear faces of the bent edge faces 60 and 61 of the flexible display are image-processed to have a black pattern in the privacy mode. In this state, when the user changes the privacy mode into the sharing mode according to a user's key, button, or touch input, the controller 180 displays one or more different images such as PIP, or the like, on the portions 60 and 61 processed to have the black pattern, whereby the terminal user can view a main screen from the front and the different user located at the side can view the sub-screen such as PIP, or the like.

FIGS. 12A to 12C are views showing an example of a method for controlling displaying of a 3D image in order to implement the sharing mode in the folding structure.

The sharing mode allows a different user, as well as the terminal user, to view a 3D image displayed on the flexible display. In the sharing mode, a 3D image is differently displayed according to the foregoing folding type of the flexible display.

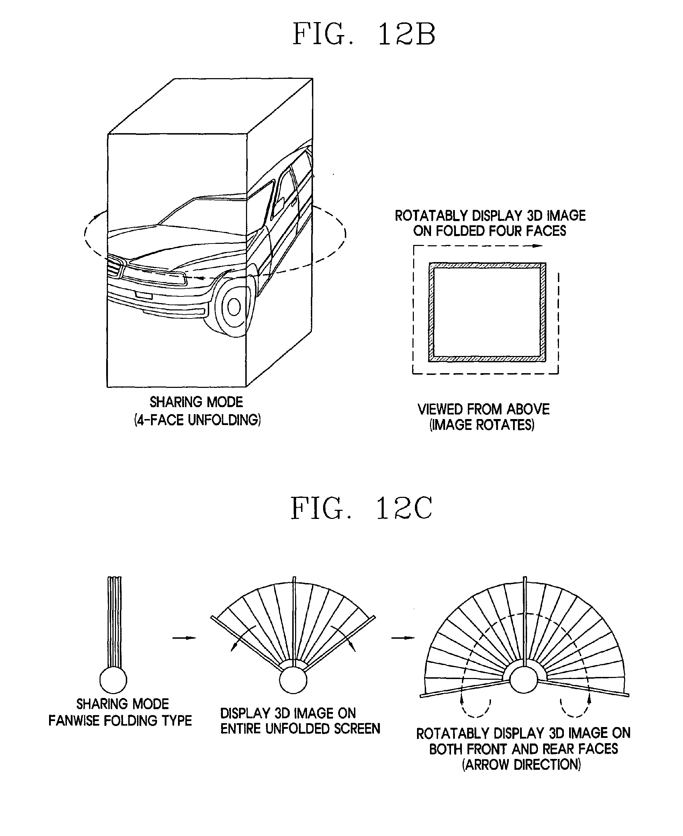

FIGS. 12A and 12B show examples of implementing the sharing mode in the four-face folding type. FIG. 12A shows a method of unfolding four faces of the flexible display wound on the four faces of the mobile terminal to display a 3D image on the entirely unfolded screen to share it with a different user, and FIG. 12B shows a method of winding the flexible display on the four faces of the mobile terminal and rotatably displaying a 3D image on all of the four exposed faces of the flexible display. This sharing method is useful when one or more different users are located at the left and right and front and rear sides of the terminal user.

FIG. 12C shows a method of implementing a 3D image on the entire flexible display unfolded in the fanwise folding structure or rotating the 3D image on both of the two fan-shaped front and rear faces in the direction of the arrow, to thus allow the 3D image to be shared. In this case, the operation of displaying the 3D image on the entire flexible display or rotating the 3D image on the two fan-shaped front and rear faces may be selectively performed according to the unfolding degree. Namely, the controller 180 may detect the unfolding angle in the sharing mode, and when the flexible display is unfolded at a first angle, the controller 180 may display the 3D image on the entire flexible display. When the flexible display is unfolded at a second angle greater than the first angle, the controller 180 rotates the 3D image on the two fan-shaped front and rear faces. This sharing method is useful when a different user is in front of the terminal user.

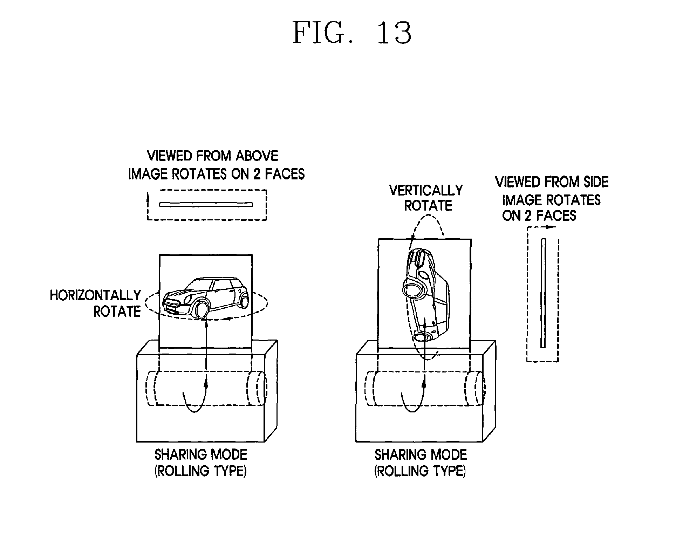

FIG. 13 is a view showing an example of a method for controlling displaying of a 3D image in order to implement the sharing mode in the rolling structure.

As shown in FIG. 13, the rolled portion of the flexible display of the rolling structure may be rolled out by a certain length according to a selection of the sharing mode or according to an external key (or button) input.

Thus, in the rolling structure, since the sharing mode is a mode allowing a different user to view a 3D image, it is operated when the flexible display is completely rolled out from the terminal. Here, the method of displaying a 3D image includes a method for displaying a 3D image on one face of the flexible display which has been completely rolled out, and a method for rotating a 3D image horizontally or vertically on the both two faces of the flexible display as shown in FIG. 13. This sharing method is useful when a different user is in front of the terminal user.

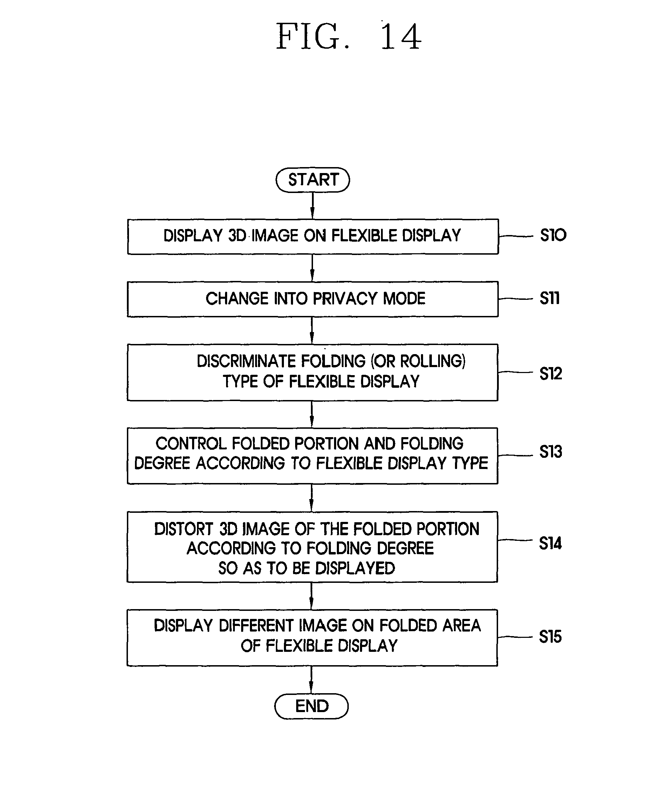

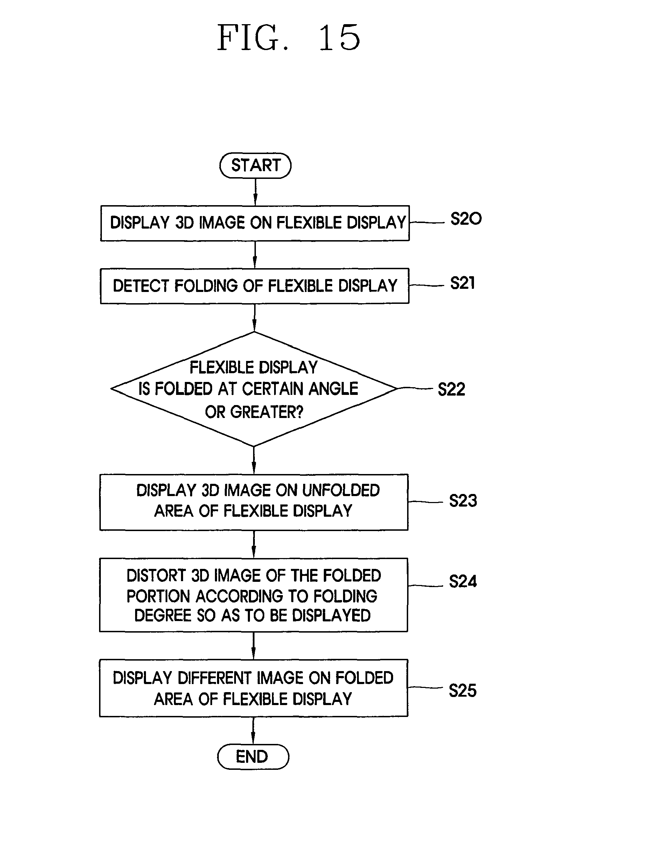

FIGS. 14 and 15 are flow charts illustrating a process of a method for implementing the privacy mode and the sharing mode on the flexible display according to an embodiment of the present invention.

As shown in FIGS. 14 and 15, entering the privacy mode may be performed by directly inputting a key, a button, or a touch by the user or automatically performed by the controller 180 by detecting a folding degree (or rolling degree) of the flexible display. FIG. 14 shows a case in which the entering the privacy mode according to a mode input by the user and FIG. 15 shows a case in which the controller enters the privacy mode according to a folding degree (or rolling degree) of the flexible display.

As shown in FIG. 14, the controller 180 displays a 3D image selected by the user on the screen of the flexible display 152 (S10). This state is a normal mode in which the 3D image can be viewed from the front and from the side.

While viewing the 3D image in the normal mode, in case of viewing a 3D image required for protecting privacy, the user may change the display mode of the mobile terminal from the normal mode to the privacy mode. The change of the mode is performed by inputting a certain button (or key), touching a particular area, or selecting a menu. Also, in case of the touch input, partial folding may be performed on a particular portion of the flexible display.

When the display mode of the mobile terminal is changed from the normal mode to the privacy mode (S11), the controller discriminates the rolling (or folding) type of the flexible display 152. The rolling type includes edge folding, divided folding, fanwise folding, terminal outer surface enclosure folding, rolling, and folding and rolling structure.

Accordingly, the controller 180 may fold the edge face of the flexible display at a certain angle or by a certain length according to the discriminated folding type (FIG. 4A), or fold one or more section faces at a certain angle or by a certain length (S13) (FIG. 4B). Here, in case of the folding type flexible display, additional information for selecting a folding direction (horizontal or vertical folding) may be provided to the user. Here, the rear face of the folded edge of the flexible display may be image-processed to have a black pattern, thus enhancing the privacy effect.

As shown in FIG. 9, by folding the edge face or certain section faces of the flexible display, the user located at the side cannot completely recognize a 3D image displayed on the mobile terminal.

In this case, however, since the user located at the side may still view a portion of the 3D image, though not perfectly, so, as shown in FIG. 10, the controller 180 previously distorts the 3D image displayed on the folded portion (the portion folded in a curved manner or planar manner) such that it can be properly, or normally, seen to the user while increasing the distortion effect to the user at the side (S14).

Thereafter, according to an additional input (key, button, touch) of the user in the privacy mode, the controller 180 displays a different image such as a PIP, or the like, on the folded outer face (screen or area) of the flexible display to thus allow the flexible display 152 to be utilized also in the sharing mode (S15). In the present embodiment, the normal mode, the privacy mode, and the sharing mode may be changed through different buttons or may be sequentially interchanged by pressing a single button several times.

In case of the rolling type, the rolling length may be reduced to display the 3D image (privacy mode), and in the sharing mode, the displayed 3D image is rotated in a certain direction.

FIG. 15 is a flow chart illustrating the process of automatically performing the privacy mode upon detecting a folding degree (or rolling degree) of the flexible display.

As shown in FIG. 15, the controller 180 displays a 3D image selected by the user on the screen of the flexible display 152 (S20). This state is a normal mode in which the 3D image can be viewed from the front and from the side.

In this state, when the user inputs a touch or a button to fold a portion of the flexible display, the controller 180 detects the degree of folding based on the number of inputting the button and the strength of a touch (touch and flicking) to check whether folding information of the flexible display exceeds a certain angle (S21, S22). Here, in case of divided folding, a certain area may be divided by a touch, and then, flicking may be performed on a corresponding area, to fold the section face.

When the flexible display is folded at more than a certain angle according to the checking results, the controller 180 may automatically change the normal mode to the privacy mode to display a 3D image on the unfolded area (S23), distort the 3D image displayed on the folded portion, and image-processes the folded outer face of the flexible display to have a black pattern. Thus, the 3D image can be normally seen to the mobile terminal user at the front, and the distortion effect of the image is increased to the user at the side (S24).

Thereafter, according to an additional input (key, button, touch) of the user in the privacy mode, the controller 180 displays a different image such as a PIP, or the like, on the folded outer face (screen or area) of the flexible display to thus allow the flexible display 152 to be utilized also in the sharing mode (S25).

In case of the rolling type, the rolling length may be reduced to display the 3D image (privacy mode), and in the sharing mode, the displayed 3D image is rotated in a certain direction.

The normal mode, the privacy mode, and the sharing mode may be changed through different buttons or may be sequentially interchanged by pressing a single button several times.

As described above, in the present invention, in the privacy mode, the flexible display is folded or rolled to control the area on which a 3D image is displayed and displaying of the 3D image, and in the sharing mode, an image such as a PIP, or the like, is displayed on the folded area of the display or the displayed image is rotated, thereby effectively implementing the privacy mode and the sharing mode on the flexible display.

In the embodiments of the present invention, the foregoing method can be implemented as codes that can be read by a processor in a program-recorded medium. The processor-readable medium may include a ROM, a RAM, a CD-ROM, a magnetic tape, a floppy disk, an optical data storage device, and the like. The processor-readable medium also includes implementations in the form of carrier waves or signals (e.g., transmission via the Internet).

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A method for displaying a 3D image of a mobile terminal (100), the method comprising:
displaying (S10, S20) a 3D image in a stereoscopic display (152);
detecting (S12, S21) folding of the stereoscopic display (152);
confirm a display mode; and
controlling (S14, S24) display of the 3D image on a folded portion according to the confirmed display mode.

2. The method of claim 1, wherein the stereoscopic display (152) comprises a flexible display including a flexible organic light emitting diode (FOLED) and a curved LCD.

3. The method of claim 1, wherein the 3D image displayed on the folded portion is distorted when the confirmed display mode is a privacy mode, wherein a rear face of the folded portion is processed as a black pattern.

4. The method of claim 1, further comprising:
displaying (S15, S25) a different image in a PIP manner on the rear face of the folded edge face when a sharing mode is set in a privacy mode.

5. The method of claim 1, wherein one of left and right or upper and lower edge faces of the stereoscopic display (152) are folded inwardly or outwardly according to a location of a side user, wherein a folded portion and direction of the stereoscopic display (152) is set through a key, a button, a touch, or a menu input.

6. The method of claim 1, wherein the stereoscopic display (152) is folded as different form according to a folding structure, wherein the folding structure includes an edge curved face folding structure, a divided folding structure, a folding screen type folding structure, a fanwise folding structure, and a terminal outer surface enclosure folding structure.

7. The method of claim 1, further comprising:
detecting (S12) rolling of the stereoscopic display; and
controlling (S14) display of a 3D image on a rolled portion according to the checked display mode, wherein a rolling length of the stereoscopic display (152) is automatically adjusts when the privacy mode is set,
wherein the stereoscopic display (152) is rolled in one direction or in both directions, and the rolling length is selected by a user.

8. A mobile terminal (100) comprising:
a stereoscopic display (152) configured to display a 3D image; and
a detecting unit (140) configured to folding of the stereoscopic display (152); and
a controller (180) configured to confirm a display mode and control display of the 3D image on a folded portion to change viewing angle of a side according to the confirmed display mode.

9. The mobile terminal of claim 8, wherein the stereoscopic display (152) includes a flexible display including a flexible organic light emitting diode (FOLED) and a curved LCD.

10. The mobile terminal of claim 8, wherein the controller (180) distorts the 3D image displayed on the folded portion when the confirmed display mode is a privacy mode, and processes a rear face of the folded face as a black pattern to prevent the viewing angle of a side user.

11. The mobile terminal of claim 8, wherein the controller (180) displays the 3D image on both surfaces of the stereoscopic display (152) or rotates the 3D image vertically or horizontally when a sharing mode is set in the privacy mode; and
displays a different image in a PIP manner on the rear face of the folded edge face when a sharing mode is set in the confirmed privacy mode.

12. The mobile terminal of claim 8, wherein the controller (180) folds left and right or upper and lower edge faces of the stereoscopic display (152) inwardly or outwardly according to the viewing angle of a side user, wherein the folded portion and direction is set through a key input, a button input, a touch input, or a menu input.

13. The mobile terminal of claim 8, wherein the controller (180) differently folds the stereoscopic display (152) according to a folding structure of the stereoscopic display (152),
wherein the folding structure includes an edge curved face folding structure, a divided folding structure, a folding screen type folding structure, a fanwise folding structure, and a terminal outer surface enclosure folding structure.

14. The mobile terminal of claim 8, wherein the controller (180) displays the 3D image on an unfolded section face in the divided folding structure and processes a folded section face such that it is transparent; and
wherein the controller (180) turns off the unfolded section face in the divided folding structure and displays the 3D image on a rear face of the folded section face, and wherein the section face is previously set or determined according to a user selection.

15. The mobile terminal of claim 8, wherein the controller (180) controls display of a 3D image on a rolled portion according to the checked display mode when the stereoscopic display (152) is rolled, wherein a rolling length of the stereoscopic display is automatically adjusts when the privacy mode is set.
